# EUROPÄISCHE PATENTSCHRIFT

(11) **EP 2 325 101 B1**
(45) Veröffentlichungstag und Bekanntmachung des Hinweises auf die Patenterteilung: **26.02.2014**
(21) Anmeldenummer: 10193243.2
(22) Anmeldetag: 27.08.2008
(51) Int. Cl.: B65D 51/32

(54) **Deckel, insbesondere mit Trinkbecher**
Lid, particularly having a beverage cup
Couvercle, notamment avec gobelet

(30) Priorität: 29.08.2007 DE 102007040996
(43) Veröffentlichungstag der Anmeldung: 25.05.2011
(62) Teilanmeldung aus: 08787506.8
(73) Patentinhaber: Tossy Coffee Cup Lid. UG & Co. KG, 85221 Dachau (DE)
(72) Erfinder: Serra, Gabriel, 80469 München (DE)
(74) Vertreter: Cremer, Christian

(56) Entgegenhaltungen:
- DE-U- 20 307 684
- US-A- 2 979 267
- US-A- 4 893 940
- US-A1- 2005 263 006

## Beschreibung

Die vorliegende Erfindung betrifft einen Deckel gemäß dem Oberbegriff des Anspruchs 1, insbesondere eines Warmgetränkebechers. Warmgetränkebecher sind solche Becher, die, häufig als Einmalbecher, von Getränke- und Restaurantständen den Passanten und Verkehrsteilnehmern angeboten werden und die mit Warm- und Heißgetränken, wie Kaffee, Tee oder Schokotrunk, gefüllt sind. Es ist dabei weithin üblich, den Geschmack des Getränks im Warmgetränkebecher durch Zugaben von zum Beispiel Zucker, Milch oder Geschmacksessenzen durch die Konsumentenhand nachträglich zu verändern. Der in das Warmgetränk nachträglich eingebrachte Stoff wird unter Benutzung eines Rührers, zum Beispiel eines Löffels, in der warmen Flüssigkeit des Warmgetränks aufgelöst. Die vorliegende Erfindung bezieht sich auf einen geeigneten Deckel und ein entsprechendes Verfahren.

### Stand der Technik

In den letzten Jahrzehnten wurde es in vielen Ländern immer üblicher, das Trinken von Warmgetränken auf die Bewegungszeit des Konsumenten, zum Beispiel während einer Einkaufstour, zu verlagern. Aus diesem Grund bieten zahlreiche Essens- und Getränkestände sowie Schnellrestaurants Getränke in zugedeckten Bechern an. Weit verbreitet ist es, dass der Konsument den Deckel beim Erwerb des Warmgetränks noch einmal anhebt, um zusätzlich geschmacksverändernde Stoffe seinem Getränke zuzusetzen, wie zum Beispiel Zucker oder Süßstoff. Weil sich Zucker oder Süßstoff nur durch Rühren günstig auflösen, händigen die Verkäufer von Warmgetränken häufig zusätzlich einen Rührer gleichzeitig mit dem Warmgetränk aus. Befindet sich der Konsument in einem Fahrzeug, so ist der getrennt zur Verfügung gestellte Rührer nach der Benutzung übrig; der Konsument muss sich des Rührers entledigen.

Die beiden japanischen Schutzrechtsanmeldungen JP-A-2001 120 414 und JP-A-2004 073 345 zeigen in den Deckel einsteckbare Kaffeelöffellösungen, die den Kaffeelöffel durch seine Formgebung und Anordnung selbständig nach der Verwendung raumsparend auf der Innenseite des Bechers zwischen Deckel und Becherinnenwand in die Ablage bringen. Durch die Löffeleinfuhrstellung bedingt bieten die dort vorgestellten Lösungen aber nur eine Schwenkbewegungsmöglichkeit des Löffels an, jedoch keine kreisende Rührbewegung. Es ist aber allgemein bekannt, dass Rührbewegungen viel schneller zu einer Auflösung des Zusatzstoffes in dem Warmgetränk führen können. Aufbauend auf dieser Erkenntnis schlagen die deutsche Offenlegungsschrift DE 100 11 726 A1, das US-Patent US 4 460 279 und die US-Offenlegungsschrift US 2001 00 36 124 A1 Rührersysteme vor, die größere Flüssigkeitsmengen in Rührbewegungen versetzen können. Die vorgeschlagenen Lösungen verfehlen aber die Kostenziele von Schnellrestaurantketten aufgrund ihrer komplizierten Ausführungen deutlich. Den Kurbelmechanismus aus der DE 100 11 726 A1 weiterentwickelnd, schlägt die WO 2007/012 679 A1 eine Lösung vor, die mit Einwegbechern und unter geringem Aufwand realisierbar ist. Die Offenlegungsschrift offenbart einen C-geformten Löffel, der durch einen Schlitz in der Mitte des Deckels nachträglich durchgesteckt werden kann. Der C-geformte Löffel ist mit einer Kurbel an einem Ende versehen, so dass der Konsument an der aus dem Deckel herausstehenden Kurbel den auf der Innenseite des Bechers an der Kurbel befestigten Löffel in Drehbewegungen versetzen kann. Mit großen, ungelenken bzw. tollpatschigen Fingern ist eine solche miniaturisierte Ausführung nicht optimal zu bedienen. Weiterhin nachteilig ist das gesonderte Abheben des Deckels für das Einfüllen von Zusatzstoffen. Der Trinkanschluss ist strohhalmartig gestaltet. Heißgetränke aus einem Strohhalm zu trinken, empfinden viele Konsumenten als unangenehm, weil das Heißgetränk punktuell in der Mundhöhle aufschlägt und dort für Verbrennungen sorgen kann. Die Kurbel kann leicht abgewinkelt werden, so dass der zusammensteckbare Löffel an seiner Durchsteckstelle des Deckels leicht auseinander fällt und der innenliegende Teil des Löffels auf den Boden des Bechers absinkt. Auch das Zusammenbauen eines entsprechenden Trinkbechers mit Deckel ist umständlich. Der Deckel ist aufzusetzen, der Löffel ist nachträglich durch den Schlitz im Deckel durchzustecken. Insbesondere bei vollen Bechern können kleine Fontänen aus dem Schlitz nach oben herausspritzen. Das Risiko, das Warmgetränk zu verschütten, ist nicht vollständig gebannt.

In der US 2007 056 447 A1 ist ein Becher mit einer Rührvorrichtung beschrieben, wobei ein oben offener Becherkörper mit einem Deckel verschließbar ist. Ein Arm erstreckt sich von der Unterseite des Deckels in den Becherkörper hinein. Ein Bedienhebel erstreckt sich von der Oberseite des Deckels durch die zweite der Öffnungen nach außen. Der Bedienhebel ist mit dem Arm verbunden, um den Arm relativ zum Becherkörper bewegen zu können. Ein Nachteil des Bechers der US 2007 056 447 A1 ist darin zu erblicken, das die Ausführungen des Deckels, der Rührvorrichtung und des Verschlusses des Deckels mit dem Becher sehr aufwändig, weil aus vielen kompliziert geformten ineinandergreifenden Komponenten bestehend, gestaltet sind. Ein Kompartment ist dazu bestimmt als wiederverwendbares Teil zu fungieren. Der Becher ist somit für eine wiederholte Verwendungen konzipiert, die beispielsweise in der Schnellimbiss-Branche als untragbar unhygienisch und ineffizient, weil kostentreibend, gilt. Weiterhin ist der als Drehgriff ausgebildete Bedienhebel für die Rührvorrichtung vom Angriffsradius her für die Benutzerfinger eher schwierig und umständlich bedienbar und scheint ob der unvermeidlichen Reibung der vielen Teile und Reibflächen eher schwergängig rotierbar zu sein.

Eine Rührvorrichtung und ein diese nutzender Getränkekrug sind in der US 4 893 940 A beschrieben. Die Rührvorrichtung ist zum Rühren bzw. Bewegen des Kruginhalts in dem Getränkekrug befestigt. Der Getränkekrug aus der US 4 893 940 A ist als Schankgefäß für größere Mengen von Getränken konzipiert, die zur Labung von mehr als einer Person ausreichend sind. Der Rührer muss somit für die Umwälzung der großen Getränkemengen ausgelegt, insbesondere entsprechend aufwändig gelagert, werden. Dies zeigt sich bespielsweise daran, dass sich der Rührer zusätzlich zur Lagerung im Krugdeckel auch auf einer Lagerstelle am Krugboden abstützt. Im Bezug auf die doppelte Lagerung Analoges trifft auch auf den oben erwähnten Becher der US 2007 056 447 A1 zu.

Der US 5 407 270 A ist ein Krug mit einer Rührvorrichtung und einem fest mit der Oberseite des Kruges verbindbarem Deckel entnehmbar. Der Deckel umfasst eine rotierbare in einer Ausnehmung des Deckels sitzende Scheibe, die mittels eines exzentrischen Drehknopfs rotiert werden kann. Die Rührvorrichtung umfasst einen Schaft und ist zentral durch eine Öffnung im Deckel so mit der Scheibe verbunden, dass bei Drehung des Drehknopfes die Scheibe und der Schaft relativ zum Krug rotieren. Der Schaft ist mit vier gleichwinklig angeordneten Flügeln ausgestattet, die die Flüssigkeit rühren.
Die doppelte Lagerung des Rührers der US 5 407 270 A ist ähnlich aufwändig wie bei dem in der oben erwähnten US 5 407 270 A beschriebenen Schankkrug.

In der gattungsgemäßen DE 203 07 684 U1 ist eine rührbare Flasche für schlammige Gewürze, Kondimente etc. beschrieben, die aus einem Flaschenkörper mit einer Ausgußöffnung, einer am oberen Ende des Flaschenkörpers einstopfbaren, diesen verschließenden Kappe, und einem Rührwerk mit einem Mischrotor und einer drehbar an der oberen Seite der Kappe gehaltenen Drehscheibe mit einem Kurbelgriff besteht, wobei der Mischrotor am oberen Ende seiner Welle über eine Kupplung durch die Drehscheibe in Drehbewegung angetrieben wird. Die Welle steht an ihrem oberen Ende durch eine lösbare formschlüssige Kupplung mit der Drehkappe in Wirkungsverbindung und ist an ihrem unteren Ende in einer zentral am Boden des Flaschenkörpers angeordneten Lagerung drehbar gehalten. Der untere Rand der Kappe liegt in ihrer eingestopften Stellung tiefer als die Ausgußöffnung. Auch bei der rührbaren Flasche aus der DE 203 07 684 U1 ist es, wegen der erhöhten Zähigkeit der aufzurührenden Schlämme erforderlich, eine aufwändige doppelte Lagerung des Rührers vorzusehen.

### Erfindungsbeschreibung

Der Erfinder der vorliegenden Erfindung suchte daher nach einer Möglichkeit, einen Deckel auf Getränkebecher setzen zu können, bei der er das Risiko des Verschüttens weiter reduzieren kann und gleichzeitig der Deckel dank seiner hervorragenden Bedienbarkeit weithin sowohl bei den Verkäufern von Warmgetränken als auch bei den Konsumenten von Warmgetränken akzeptiert wird.

Die erfindungsgemäße Aufgabe wird durch einen Deckel für ein Getränkegefäß wie ein Becher nach dem Hauptanspruch gelöst. Ein günstiges, zügiges Zusammenstellverfahren für die Verwendung eines entsprechenden Deckels wird in Anspruch 19 vorgeschlagen. Vorteilhafte Weiterbildungen sind den abhängigen Ansprüchen zu entnehmen.

Welche bestimmungsgemäße Flüssigkeitsaufnahme der Getränkebecher erfährt, obliegt dem Nutzer des Getränkebechers, so dass vorliegende Erfindung auch auf Getränkebecher anzuwenden ist, die mit Kaltgetränken befüllbar sind. Vorzugsweise wird Zucker, Milch, Süßstoff oder ein sonstiger Zusatz in einem Warmgetränk wie Kaffee gelöst, weil die Löslichkeit deutlich erhöht ist gegenüber entsprechenden Kaltgetränken. Getränkebecher für Laufkundschaft werden so ausgelegt, dass es sich bei den Getränkebechern um Einmalbecher handelt. An dem Deckel befindet sich wenigstens ein Rührer. Der Deckel umfasst mehrere Teile. Der Deckel ist geteilt. Der Deckel umfasst einen Deckelhauptteil. Parallel zum Deckelhauptteil, in gleicher Richtung wie sich das Deckelhauptteil rotatorisch erstreckt, breitet sich eine Drehscheibe aus. An der Drehscheibe ist der Rührer befestigt, wenn der Deckel mit dem Rührer zusammengebaut ist. Der Rührer steht auf der einen Seite aus dem Deckel hervor. Auf der anderen Seite befindet sich die Drehscheibe. Zwischen beiden Teilen erstreckt sich das Deckelhauptteil. In seitlicher Ansicht sehen Deckelhauptteil als Mittelteil und Drehscheibe und parallel hierzu ausgerichtet der Rotor wie ein Schichtaufbau aus. Alle Teile sind fest miteinander verbunden, wenn der Deckel zusammengebaut ist. Von der Oberseite kommend, schaut der Konsument zunächst auf die Drehscheibe, unter der sich das Deckelhauptteil erstreckt. Auf der Unterseite des Deckelhauptteils gibt es den Rotor mit seinem Rührer. Ein Teil des Rotors liegt parallel zum Deckelhauptteil und zur Drehscheibe.

Das Deckelhauptteil hat eine Durchbrechung. Durch die Durchbrechung ist ein Teil des Rotors durchsteckbar. In einer alternativen Ausführung ist ein Teil der Drehscheibe durch das Deckelhauptteil durchsteckbar. Beide Teile können lagernder Weise ihre Abstützung in der Durchsteckstelle des Deckelhauptteils suchen. Das Deckelhauptteil verschließt somit wesentliche Bereiche des Bechers. Gleichzeitig dient das Deckelhauptteil als Lager für die Drehscheibe. Auch dient das Deckelhauptteil als Lager für den Rotor. Das Lager des Rotors ist gleichzeitig der Rotationspunkt, um den sich der Rotor drehen kann. Der Rotor lenkt den Rührer, der Teil des Rotors ist, von dem Rotationspunkt aus. Der Rührer greift an einem Ende des Rotors an. Kleine Umdrehungen des Lagers des Rotors sorgen für eine im Vergleich hierzu große Umdrehung des Rührers des Rotors.

Durch die parallele Ausrichtung des Deckelhauptteils mit der Drehscheibe und einem wesentlichen Teil des Rotors auf der einen Seite und der günstigen Lagerung des Rotors am Deckelhauptteil auf der anderen Seite lässt sich ein sehr kompakter zusammenhängender Deckel spritzgusstechnisch herstellen. Er kann Raum sparend verwahrt werden, es werden nur minimalste Volumina in axialer Becherrichtung innerhalb des Bechers durch die Rührvorrichtung beansprucht. Der Deckel ist flach.

Das eine Ende des Rotors liegt im Lager des Rotors. Das andere Ende des Rotors, der insgesamt ein längliches, mehrfach abgewinkeltes Teil ist, bildet sich aus dem Rührer. In einer Ausgestaltung kann der Rührer ein längliches, einsteckbares Rundsteckteil sein, das formschlüssig in einen Längssteg des Rotors einzustecken ist. Das Lagerende des Rotors weist axial in die eine Richtung, während der Rührer an dem anderen Ende des Rotors in die entgegengesetzte Richtung weist. Das Lagerende lagert in der Mitte des Deckelhauptteils. Der Rotor hat ungefähr die gleiche Länge wie der Radius des Deckelhauptteils bzw. wie der Radius der Drehscheibe ausgestaltet ist. Durch diese Gestaltung sind die drei Einzelteile des Deckels, Deckelhauptteil, Drehscheibe und Rotor, insgesamt sehr flach.

Das Deckelhauptteil hat eine komplett umlaufende Umlaufwulst, in dessen Mitte der Deckel eine Deckelinnensenke aufweist. Die Deckelinnensenke dient zur Aufnahme der Drehscheibe. Die Trinköffnung ist aus einem am Rande angeformten Mundstück herausgebrochen. Die Umlaufwulst geht in das Mundstück über. Beim Trinken stört die Drehscheibe nicht, denn sie liegt flach unterhalb des Deckelrands.

In der Drehscheibe ist ein Fingerring vorgesehen. Der Fingerring hat die Größe, dass ein üblicher Zeigefinger oder Mittelfinger mit der Fingerkuppe dort eingreifen kann. Durch kreisende Bewegungen mit dem entsprechenden Finger lässt sich die Drehscheibe in Drehbewegungen versetzen und der an sie angeschlossene Rotor rotiert gleich schnell mit. Der Bedienbarkeit zuträglich ist die Anordnung des Fingerrings im Außenbereich der Drehscheibe, so dass die durchzuführende Drehbewegung einen größeren Radius aufweist, der im Wesentlichen dem Schwenkradius des Handgelenkes entspricht.

Weiterhin ist in dem Deckel eine Einfüllöffnung vorgesehen. Die Einfüllöffnung setzt sich aus zwei einzelnen Einfüllöffnungen, so genannten Teileinfüllöffnungen, zusammen, die sich im Deckelhauptteil und in der Drehscheibe befinden. Weil Drehscheibe und Deckelhauptteil zueinander verdreht werden können, kann die Einfüllöffnung geöffnet werden, das ist die Einfüllstellung. Die Einfüllöffnung kann durch ein Verdrehen der Drehscheibe zum Deckelhauptteil verschlossen werden, das ist die Trinkstellung. In der Trinkstellung hält die Drehscheibe die Trinkflüssigkeit bei einem Umkippen des Warmgetränkebechers zurück. Idealerweise sind Einfüllstellung und Trinkstellung jeweils durch ein Verdrehen der Drehscheibe um 180° einzunehmen. Große Verdrehwinkel sorgen für eine leichtere Bedienbarkeit.

An die Umlaufwulst schließt sich ein Klemmrand an. Der Klemmrand ist so gestaltet, dass der Deckel auf den Rand des Warmgetränkebechers aufgesetzt werden kann und eine formschlüssige Verbindung eingehen kann. Der Klemmrand hat eine eigene Höhe. Die Höhe der Leiste des Rotors ist geringer als die Höhe des Klemmrandes. Durch diese Gestaltung liegt zum einen die Leiste selbst nicht in der Getränkeflüssigkeit, was als hygienischer angesehen wird, und zum anderen fördert es die Stapelbarkeit, die später noch erklärt wird.

Deckelhauptteil, Drehscheibe und Rotor können Kunststoffteile sein. Alle Teile sind flache Teile. Flache Teile lassen sich mit geringer Schließkraft in Spritzgußmaschinen geringer Güte zuverlässig herstellen. An einem Ende des Rotors ist eine Rotorniete angeformt. Wird die Rotorniete in das Lager des Deckelhauptteils eingebracht, so verbleibt dem Rotor ein einziger Freiheitsgrad, nämlich der rotierende Bewegungsgrad. Durch das Eindrücken der Niete werden Rotor, Deckelhauptteil und Drehscheibe in einen Permanentverbund gebracht; sie können nicht mehr auseinanderfallen.

Ein erfindungsgemäßer Deckel sorgt zuverlässig für ein Zurückhalten der Flüssigkeit selbst bei Erschütterungen. Gleichzeitig ist er leicht zu bedienen. Der Deckel ist auch dann nicht mehr abzunehmen, wenn nachträglich noch irgendwelche Zusatzstoffe wie Zucker in das Getränk hineingeschüttet werden sollen.

Als Drehscheibe werden auch solche segmentartigen Gegenstände betrachtet, die nicht mehr vollständig die Deckelinnensenke überspannen müssen, sondern eine ausreichende Fläche offerieren, so dass mit nur einem Finger der Rührer leicht in Drehbewegungen versetzt werden kann.

Zur Lagerung können die einzelnen Deckel in ihrem unverbauten Zustand und in ihrem noch nicht vollständig zusammengebauten Zustand leicht in gestapelter Form aufbewahrt werden. In einem Restaurant sind die Deckel zweiteilig anzuliefern. Das erste Teil umfasst den Deckelhauptteil, die Drehscheibe und die an dem Deckelhauptteil befestigte Leiste des Rotors. Ein zweites, zum Beispiel hygienisch abgesondertes und besonders eingepacktes Teil, kann der Rührer sein. Der Rührer ist formschlüssig in die Leiste einzustecken. Dafür sieht die Leiste eine Rühreröffnung vor. Ist der Rührer in die Leiste eingesteckt, so kann der Deckel auf den Becher aufgesetzt werden. Hierzu bietet der Deckel einen Klemmrand. Der Klemmrand ist etwas größer als die obere, querverlaufende Öffnung des Bechers.

Durch die Stapelbarkeit des ersten Teils des Deckels können viele erste Teile des Deckels übereinander gestapelt, zum Beispiel in einem Deckelspender, platzsparend aufverwahrt werden. Hierzu können mehrere erste Teile des Deckels übereinander gestapelt werden und anschließend leichtgängig wieder abgezogen bzw. getrennt werden.

Drehscheibe und Rührer sind zusammenbaubar. Das Deckelhauptteil bildet ein Lager. Das Lager ist der zentrale Rotationspunkt, auf den sich die Rotationsbewegung bezieht. Die Rotationsbewegung ist den Lagerpunkt umrundend gestaltet. Die Rotation kann um den Lagerpunkt herum ablaufen. Das Lager wird von einem durchsteckbaren Anschluss genutzt. Die Rotationsbewegung umrunded einen mittleren Punkt. Die Rotationsbewegung des Rührers läuft gleichmäßig beabstandet zu der Wand des Einmalbechers. Der Deckel ist so gestaltet, dass der Rotor von dem Deckel wegweisend auf den Boden eines anzuschließenden Einmalbechers zeigt.

Deckelhauptteil, Drehscheibe und der Gegenstand, der als Rührer genutzt werden kann, sind drei Teile, die im zusammengebauten Zustand zumindest teilweise parallel anzuordnen sind. Die Drehscheibe liegt zurückgesetzt innerhalb einer äußeren Wulst des Deckelhauptteils. Das Deckelhauptteil hat einen umlaufenden Rand, der höher ist, als die Höhe der in den Deckelhauptteil einzulegenden Drehscheibe. Die Drehscheibe bietet Bereiche, die als Führungsmittel genutzt werden können. Ein solches Führungsmittel kann der Anschluss für einen Trinkhalm sein. Ein solches Führungsmittel kann ein Eingriff für einen Fingerring sein. Ein solches Führungsmittel kann eine Klemmbefestigung sein.

Der Deckel ist doppellagig gestaltet. Die Zweilagigkeit des Deckels sorgt für eine Rotierbarkeit. In eines der beiden zueinander rotierbaren Teile lässt sich der Rührer befestigen. Das Deckelhauptteil ist der tragende Teil, an dem die weiteren Teile des Einmaldeckels befestigt werden können.

Der Rührer weist erfindungsgemäß wenigstens ein zumindest teilweise flächiges Rührelement, insbesondere ein segelförmiges Rührelement, auf. Das Rührelement ist an einem es zumindest teilweise umfassenden Aufspannrahmen aufgespannt. Das Rührelement kann einschichtig mittels einer Schicht ausgebildet sein. Das Rührelement kann zumindest teilweise auch mehrschichtig mittels mehr als einer Schicht ausgebildet sein. Bei mehrschichtigem Aufbau des Rührelementes sind die Schichten zumindest teilweise flächig, insbesondere an ihren Rändern, miteinander verbunden, beispielsweise verklebt. Die Steifigkeit des Rührelementes unterstützt die Erzielung einer vorgebbaren Rührwirkung. Der Aufspannrahmen kann den unteren Teil des Rotors bilden. Der Aufspannrahmen ermöglicht das Aufspannen des flächigen Rührelementes in zumindest einer Erstreckungsrichtung, vorzugsweise in zwei unterschiedlichen Erstreckungsrichtungen. Der Aufspannrahmen kann das Rührelement jedoch auch in drei unterschiedlichen Erstreckungsrichtungen aufspannen.

Das Rührelement ist erfindungsgemäß mit einem gebogenen Strohhalm verbunden. Der Strohhalm ist in ein Fixiermittel, z. B. zwei gegeneinander gespiegelte Fixierklemmen oder klemmartige Vertiefungen, einzulegen. Der Strohhalm kann so umgeklappt werden, dass ein Ende des Strohhalms in dem Fixiermittel liegen kann. Um ihn in eine Trinkposition zubringen, kann der Strohhalm hochgeklappt werden. Der Strohhalm ist an einem drehbaren Teil des Deckels befestigt. Der Strohhalm übernimmt die Drehbewegungen des Deckels und leitet sie an sein Ende mit Rührwirkung weiter. In einer Stellung ist der Strohhalm ein Trinkhalm. In einer Stellung ist der Strohhalm ein Rührelement. Als Strohhalm werden Gegenstände aus Stroh, aus Kunststoff oder sonst wie halmartige, längliche Gegenstände im Sinne der vorliegenden Erfindung bezeichnet. Der Deckel bietet eine klemmende Fixiervorrichtung für ein Ende des Trinkhalms. Der Trinkhalm steht wenige Prozent seiner gesamten Länge über die Fixiervorrichtung in Richtung auf den äußeren Rand des Deckels über. Der Trinkhalm ist ein mehrfach umgebogener Trinkhalm, der zu seiner Rotationsrichtung umklappbar ist. In der Rührstellung ist der Trinkhalm zumindest wie ein einfaches C gebogen. In seiner Trinkstellung wird zumindest ein Endbereich des C-förmigen Trinkhalms umgebogen. Der Rotor ist in einer Ausgestaltung ein abschnittsweise rotationssymmetrischer länglicher und im Durchmesser schmaler Gegenstand, der in seinen Abmessungen deutlich länger als breit ist. Fixiermittel und Fingerring können die gleiche Einwölbung in dem Deckel sein. Die einzelnen Teile, die scheibenartig sind, des Deckels können durch den Trinkhalm zusammengehalten werden. Der Trinkhalm hat dazu einen ziehharmonikaartigen Abschnitt, in dessen nach Innen eingewölbten Abschnitte jeweils ein Teil des Deckels gelagert ist.

Das Rührelement kann beispielsweise eine segelartige Dreieckform aufweisen. Der Strohhalm könnte das Rührelement jedoch auch dreidimensional, beispielsweise in der Art einer axial in die Länge gezogenen Schiffsschraube, aufspannen. Das Röhrchen wird erfindungsgemäß als Trinkhalm genutzt.

Das Rührelement kann vorteilhafterweise als zumindest teilweise, vom Becherinhalt durchdringbares, insbesondere im Becherinhalt auflösbares, lebensmitteltaugliches Behältnis für zumindest einen darin mengenmäßig vorkonfektionierten Zusatzstoff ausgebildet sein. Das Behältnis kann den mindestens einen Zusatzstoff in den Becherinhalt freisetzen. Der Zusatzstoff kann beispielsweise Zucker oder ein Gewürz oder ein Medikament sein. Das Rührelement kann beispielsweise als, vorzugsweise teilweise, im Becherinhalt auflösbares lebensmitteltaugliches Sackelement ausgebildet sein, das bei seiner teilweisen Auflösung zumindest einen zu verrührenden Zusatzstoff, wie Zucker oder ein Gewürz oder ein Medikament, in den Getränkeinhalt des Bechers freisetzt. Die teilweise Durchdringung bzw. Auflösung und damit wirkungsmäßige Öffnung des Behältnisses bzw. Sackinhaltes kann beispielsweise durch die Wärme des in den Becher eingefüllten Getränkes erfolgen. Die Auflösung könnte auch durch einen bestimmten ph-Wert des Becherinhaltes erfolgen. Die Durchdringung bzw. Auflösung kann sofort beim Eintauchen des Rührelementes mit dem Behältnis in den Becherinhalt oder zeitlich verzögert erfolgen.

Die Ausbildung des Rührelementes kann zweischichtig oder mehrschichtig sein. Das Rührelement ist vorzugsweise zweischichtig, also mittels zweier Schichten, ausgebildet. Die Schichten sind vorzugsweise an ihren Rändern für den Zusatzstoff dicht verbunden. Das Behältnis ist mittels der, insbesondere zwischen den, Schichten mit zumindest einem Kompartment für die, insbesondere vorübergehende, Lagerung mindestens eines, vorzugsweise mengenmäßig vorkonfektionierten, Zusatzstoffes ausgebildet.

Vorteilhafterweise kann das Rührelement zumindest zwei, insbesondere voneinander separierte, Kompartments für jeweils zumindest einen Zusatzstoff aufweisen. Die Kompartments können, insbesondere zeitlich gestaffelt, z. B. mit unterschiedlicher Freisetzungsgeschwindigkeit, mittels einer Ratenreguliervorrichtung, wie unterschiedlicher Membrandicken oder unterschiedlicher Maschengrößen der Schichten, die Freisetzung der Zusatzstoffe in den Becherinhalt in vorbestimmbaren zeitlichen Mengenraten ermöglichen.

Durch die zeitlich gestaffelte Ausgestaltung der Durchdringung bzw. Auflösung, beispielsweise durch unterschiedliche Membrandicken der Rührelementschichten, kann die Freisetzung der Zusatzstoffe in den Becherinhalt auch entweder in vorbestimmbaren Zeitabständen oder in vorbestimmbaren Mengenraten, oder beides, erfolgen. Dies ist beispielsweise insbesondere dann vorteilhaft, wenn der zumindest eine Zusatzstoff eine medizinisch wirksame Substanz, wie ein Medikament, wie Aspirin, ist. Dies kann auch dann vorteilhaft sein, wenn die Zusatzstoffe im Becherinhalt unterschiedliche Löslichkeiten aufweisen. Trotz unterschiedlicher Löslichkeiten der Zusatzstoffe können mittels der Ratenreguliervorrichtung, die Mengenverhältnisse der, insbesondere miteinander und mit dem Becherinhalt in physikalischer, chemischer, pharmazeutischer etc. Weise unterschiedlich reagierenden, Zusatzstoffe, die im Becherinhalt gelöst sein sollen, in kontrollierter und vorgebbarer Mengenrate in den Becherinhalt abgebbar sein.

Das Rührelement kann zumindest ein verwirbelungsinduzierendes, insbesondere verwirbelungsverstärkendes, Gestaltungselement, wie ein Strömungsdurchlass- bzw. Verwirbelungsmittel, wie eine Durchströmungsöffnung, aufweisen. Die Durchströmungsöffnungen des Rührelementes könnten bei der Produktion des Rührelementes mittels für den Becherinhalt durchdringbarer bzw. von diesem auflösbarer Behältnisse, wie im Becherinhalt auflösbarer Säckchen, verschlossen werden. Die Zusatzstoffbehältnisse können mengenmäßig mit dem Zusatzstoff vorkonfektioniert werden.

Bei der bestimmungsgemäßen Ingebrauchnahme des Rührelementes durchdringt der Becherinhalt das Zusatzstoffbehältnis bzw. löst sich das Zusatzstoffbehältnis im Becherinhalt auf und gibt den jeweiligen Zusatzstoff frei. Durch die Durchdringung bzw. Auflösung des Zusatzstoffbehältnisses, d. h. bei Aktivierung der Ratenreguliervorrichtung, wird das verwirbelungsinduzierende Gestaltungselement, wie die Durchströmungsöffnung, in den funktionsgerechten, d. h. verwirbelungsunterstützenden bzw. ―induzierenden, Zustand gebracht. Auf diese Weise kann vorteilhafterweise der Zusatzstoff auf effiziente Weise in den Becherinhalt verbracht, ebendort freigesetzt und verrührt werden, ohne dass der Zusatzstoff und sein Behältnis je eine extra Öffnungs- und Einbrinungshandlung in den Becherinhalt erfordern würde.

Die Drehscheibe kann auch mit einem Fixiermittel zur Fixierung für den in der Permanentverbringung befindlichen Rotor ausgestattet sein. Vorzugsweise ist das Fixiermittel an der Oberseite der Drehscheibe angeordnet. Das Fixiermittel erfüllt im Zusammenwirken mit dem oberen Ende des Rotors durch ein axiales Vorstehen die Funktion des Fingerringes. Ein axiales Vorstehen ist ein Abstehen im Wesentlichen in Becherlängsrichtung nach oben, wobei der Becher in Gebrauchslage zu denken ist.

Das Fixiermittel und das obere Ende des Rotors gestatten im Verschwenkzustand der Permanentverbringung des Rotors die unkomplizierte rotatorische Inbewegungsetzung des Rührers durch den Konsumenten. Das Fixiermittel ist an der Oberseite der Drehscheibe angeordnet. Das Fixiermittel kann als zwei nach oben abstehende, insbesondere gekrümmte, Fixierlaschen ausgebildet sein. Das Fixiermittel kann auch als Fixierring, als Fixierbügel etc. ausgebildet sein. Das Fixiermittel ist vorzugsweise im Außenbereich der Drehscheibe angeordnet.

### Figurenbeschreibung

Die vorliegende Erfindung kann noch leichter verstanden werden, wenn Bezug auf die beiliegenden Figuren genommen wird, wobei
Fig. 1 einen erfindungsgemäßen Deckelhauptteil von oben zeigt,
Fig. 2 einen erfindungsgemäßen Deckel von oben zeigt,
Fig. 3 Deckelunterteile aus verschiedenen Perspektiven, wie zum Beispiel den Rührer, zeigt,
Fig. 4 eine alternative Ausführungsform eines erfindungsgemäßen Deckels zeigt,
Fig. 5 den Deckel der Figur 4 zusammen mit einem Warmgetränkebecher zeigt,
Fig. 6 eine erfindungsgemäße Ausführungsform des Deckels in einem ersten Zwischenzustand auf dem Weg in die Permanentverbringung zeigt,
Fig. 7 die Ausführungsform aus Fig. 6 im Endzustand der Permanentverbringung zeigt und
Fig. 8 eine weitere Ausführungsform des Rührelementes der Fig. 6 und 7 zeigt.

### Detailbeschreibung

Nachfolgend werden drei Ausführungsformen der Erfindung anhand der Figuren näher beschrieben.

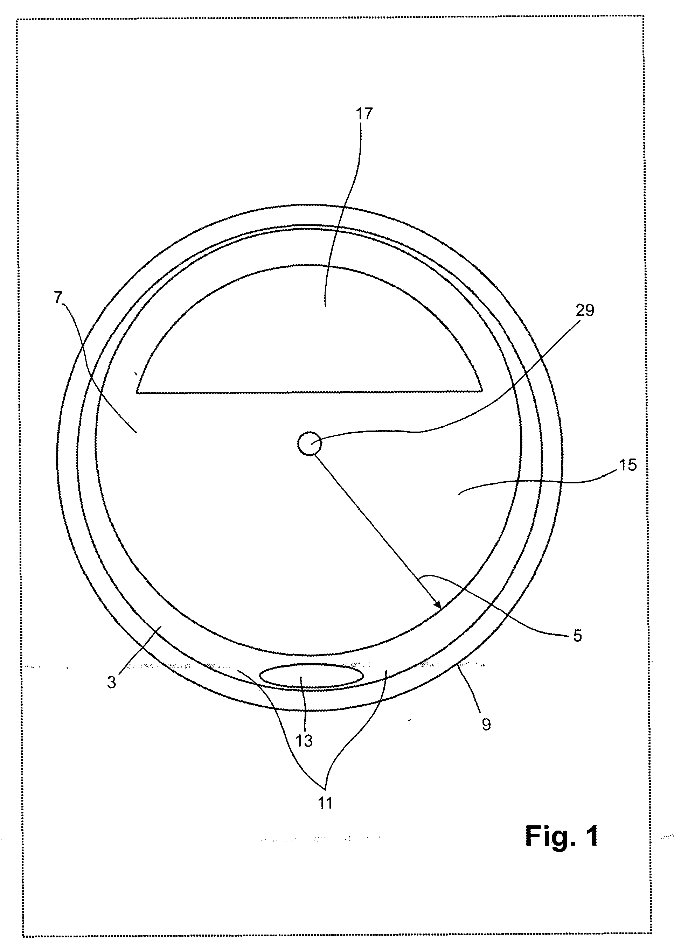

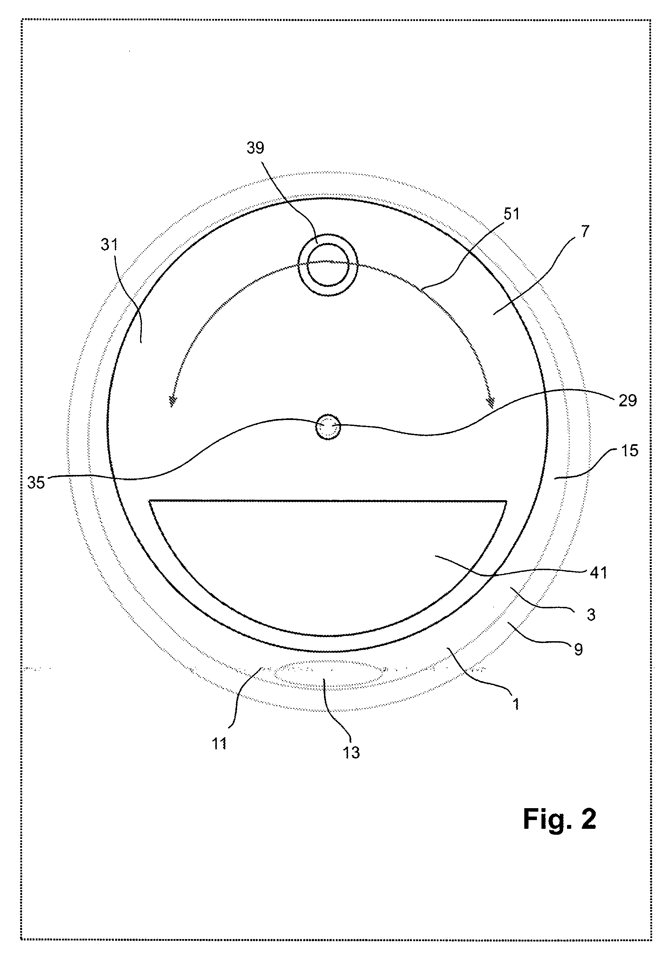

Figur 1 zeigt den mittleren Teil eines erfindungsgemäßen Deckels, das Deckelhauptteil 15. Das Deckelhauptteil 15 ist durch den Klemmrand 9 begrenzt, an dem sich die Umlaufwulst 3 zur Mitte hin anschließt, bevor die Deckelinnensenke 7 als weitere, größte Fläche bis zum Lager 29 heranreicht. Die Deckelinnensenke 7 weist eine Einfüllöffnung 17 auf. Aus dem Umlaufwulst 3 ist ein besonderer Bereich herausgeformt, der das Mundstück 11 darstellt. Das Mundstück 11 ist nach oben hin aufgeworfen. Nach oben im Sinne der Erfindung ist die Richtung vom Becher weg bezeichnet. In dem Mundstück 11 befindet sich die Trinköffnung 13. Die Deckelquerfläche 5 erstreckt sich vom Lager 29 bis zur Umlaufwulst 3 und ist dazu bestimmt, die Drehscheibe 31 (zu sehen in Figur 2) aufzunehmen.

Figur 2 zeigt die Drehscheibe 31 in Verbindung mit dem darunter liegenden Deckelhauptteil 15. Das darunter liegende Deckelhauptteil 15 ist graphisch schwächer ausgeführt, als die darüber liegende Drehscheibe 31. Durch die feste Verbindung über ein Rotornietenloch 35, das das Lager 29 darstellt, bleibt der Drehscheibe 31 nur ein Freiheitsgrad übrig, nämlich die Rotationsrichtung 51. In der Drehscheibe 31 ist ein Fingerring 39 eingeformt. Der Fingerring 39 weist eine Zentriererhöhung auf, er ist in der dargestellten Ausführung ein durch die Drehscheibe 31 durchgehendes Loch. Die Drehscheibe 31 liegt im Bereich der Deckelinnensenke 7 des Deckelhauptteils 15. Die Drehscheibe 31 wird durch die Umlaufwulst 3 begrenzt, aus dem gesondert das Mundstück 11 mit seiner Trinköffnung 13 höher stehend herausgeformt ist. Der Deckel 1 setzt sich mehrteilig zusammen. Den äußersten Teil des Deckels 1 stellt der Klemmrand 9 dar. Sowohl in der Drehscheibe 31 ist eine Einfüllöffnung 41 als auch in dem darunter liegenden Deckelhauptteil 15. In der in Figur 2 dargestellten Stellung hat der Deckel 1 die Trinkstellung 11 eingenommen, denn die Einfüllöffnung 41 endet auf der Deckelinnensenke 7 - die Einfüllöffnung 41 ist nicht durchgehend.

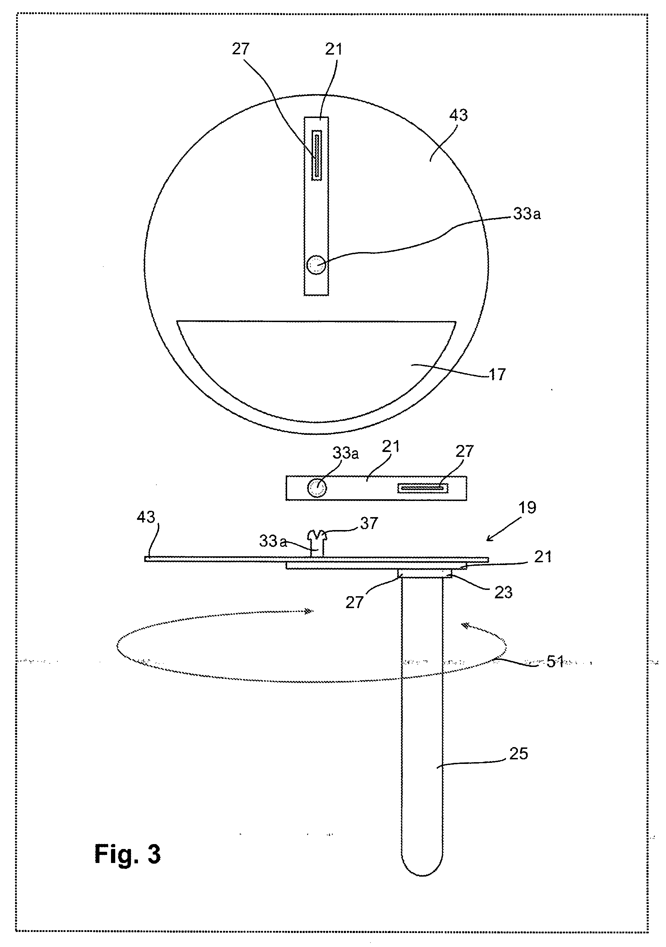

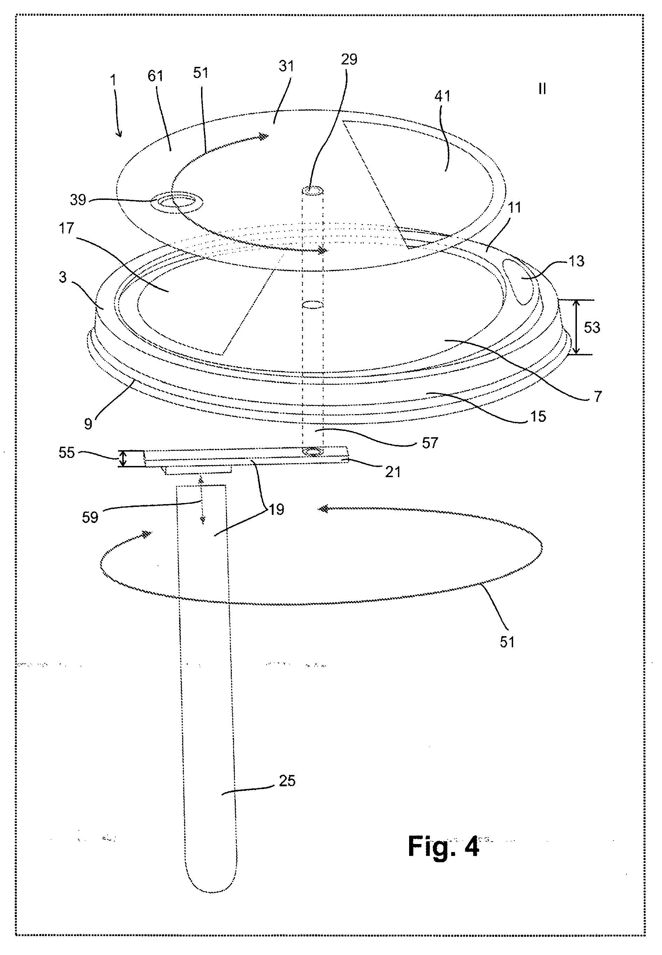

In Figur 3 wird der untere Bereich eines nicht erfindungsgemäßen Deckels aus verschiedenen Perspektiven wiedergegeben, wobei hervorzuheben ist, dass die zusätzliche Unterlegscheibe 43, die ungefähr die gleichen Abmessungen wie die Drehscheibe 31 (s. Figur 2) hat, rein fakultativ ist, und sie kann in einer weiteren Ausführungsform wegfallen. Der Rotor 19 setzt sich aus einer Leiste 21, einer angeformten Rotorniete 33a, einer Steckkrempe 27 und einem Rührer 25 zusammen. Die Steckkrempe 27 ist so gestaltet, dass der Rührer 25 nachträglich in die hierfür vorgesehene Steckvorrichtung 23 formschlüssig eingesteckt werden kann. Die Rotorniete 33a bietet Nietenwiderhaken 37, in einem weiteren Ausführungsbeispiel wenigstens einen Nietenwiderhaken. Durch den Nietenwiderhaken 37 wird der Rotor 19 mit der Drehscheibe 31 (s. Figur 4) fest verbunden. Im dem Deckelhauptteil und ggf. in der Unterlegscheibe 43 kann eine Einfüllöffnung 17 vorgesehen sein. Der Rotor 19 kann eine Bewegung in Rotationsrichtung 51 ausführen. Die Rotationsrichtung 51 ist die einzig zur Verfügung stehende Bewegungsrichtung für den Rührer 25.

In Figur 4 ist die Verbindung zwischen Drehscheibe 31 und Rotor 19 durch die gemeinsame Achse 57 dargestellt, wobei die Nietenausführung nach Figur 3 nicht explizit herausgezeichnet ist. Neben Nietverbindungen können auch jegliche andere geeignete lagerbildende Verbindungen gewählt werden, die so gestaltet sind, dass das Unterteil und das Oberteil durch das Deckelhauptteil 15 durchgehen können. Die Drehscheibe 31 ist nahezu in der Trinkstellung II gezeigt, weil Drehscheibe 31 und Deckelhauptteil 15 so zueinander verdreht sind, dass die Einfüllöffnungen 17, 41 nicht übereinander stehend sind. Nach der dort gewählten Ausgestaltung des Fingerrings 39 ist dieser optisch gesondert in der Drehscheibe 31 hervorgehoben. Er ist aber nicht durch die Drehscheibe durchgehend, so dass bei der gewählten Fingerringposition immer noch die Trinkflüssigkeit zuverlässig durch die Drehscheibe 31 zurückgehalten werden kann. Durch ein rotatorisches Verdrehen der Drehscheibe 31 zum Deckelhauptteil 15 bewegt sich der Rotor 19 mit dem Rührer 25 in gleicher Richtung. Anhand der beiden Rotationsrichtungspfeile 51 ist zu sehen, dass mit einer kleinen Rotationsbewegung der Drehscheibe 31 eine größere, da weiter außermittig ausgelenkte, Rotationsbewegung des Rührers 25 innerhalb des Bechers möglich ist. Die Drehscheibe 31 wird durch die Umlaufwulst 3 begrenzt. In der Umlaufwulst 3 ist das ebenfalls die Drehscheibe 31 begrenzende Mundstück 11 zusätzlich höhenmäßig herausgezogen angeformt. Aus dem Mundstück 11 ist eine Aussparung 13 ausgenommen, die als Trinköffnung dient. Die Trinköffnung 13 ist oval gebogen. Die Trinköffnung 13 ist leicht länglich. Im Wesentlichen bestimmt der Klemmrand 9 zusammen mit der Umlaufwulst 3 die Höhe des gesamten Deckels 1, außer dem aus dem Deckel hervorstehenden Rührer 25. Der größte Anteil an der Höhe des Deckelhauptteils 15 ergibt sich aus der Höhe 53 des Klemmrands 9. Zusätzlich Höhen bildend ist das Mundstück 11. Die Höhe 55 der Leiste 21 des Rotors 19 ist im Vergleich zur Höhe 53 des Klemmrands 9 deutlich geringer. Hierdurch lassen sich mehrere Deckel 1 ohne Rührer 25 übereinander stapeln. Durch die Achse 57 ergibt sich das Lager 29 für die Drehscheibe 31 und den Rotor 19. Durch eine in Achsrichtung durchzuführende Bewegung ergibt sich die Einsteckrichtung 59 für den Rührer 25 in die Leiste 21, um so den Rotor 19 zu bilden. Die Drehscheibe 31 läuft auf der Deckelinnensenke 7. Der Fingerring 39 befindet sich am Rand, im Außenbereich 61 der Drehscheibe 31.

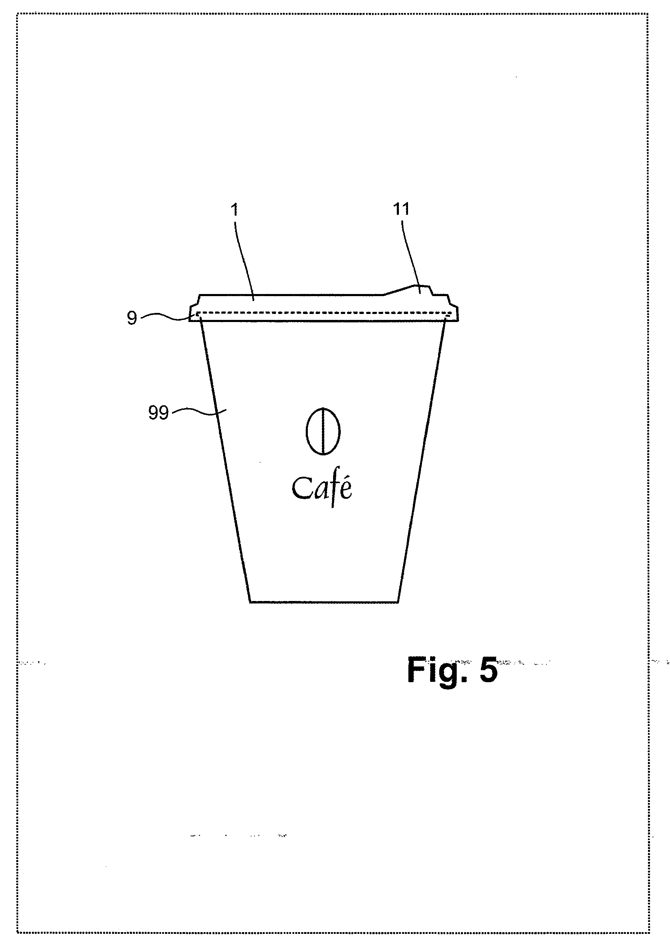

In Figur 5 ist der Becher als Warmgetränkegefäß 99 zusammen mit dem Deckel 1 dargestellt, wobei zu sehen ist, wie der Klemmrand 9 auf dem Warmgetränkegefäß 99 sitzt.

Nach einer Ausgestaltung wird die permanente Verbindung der Drehscheibe und des Rotors mit dem dazwischen liegenden, das Lager bildenden Deckelhauptteil durch eine Nietverbindung hergestellt. Nach einer weiteren Ausgestaltung können die Kunststoffteile durch ein Kunststoffschweißverfahren permanent miteinander in Verbindung gebracht werden. Genauso gut können die einzelne Teile, angedeutet in Figur 4, entlang der gemeinsamen Achse 57 durch ein Klebeverfahren verbunden werden. Die einzelnen stapelbaren Deckel 1 lassen sich fabrikseitig ohne Rührer 25 ausliefern. Der Rührer 25, der zum Beispiel hygienisch gesondert verpackt sein kann, lässt sich nachträglich durch eine Steckbewegung in Einsteckrichtung 59 anbringen. Beide den Deckel bildenden Teile, Deckeloberteil und Rührer 25, können raumsparend ausgeliefert werden. Durch ein Verdrehen der Drehscheibe 31 kann eine Einfüllstellung l eingenommen werden, in der Zucker oder sonstige Zusatzstoffe in den Becher eingefüllt werden können. Soll der Rührer 25 zum Beispiel für das Abkühlen des Getränkes oder für das Verrühren der Zusatzstoffe nicht mehr weiter benutzt werden, so kann der Rührer in eine Position verdreht werden, dass er ohne zu stören im Becher 99 verbleiben kann. Die einzige größere Auslassöffnung ist dann die Trinköffnung 13 des Mundstücks 11. Ein Herausschwappen oder Verschütten der Trinkflüssigkeit kann so erfolgreich unterbunden werden; nach dem Abfüllen des Getränks müssen Deckel und Warmgetränkegefäß weder vom Verkäufer noch vom Konsumenten auseinander gebaut werden.

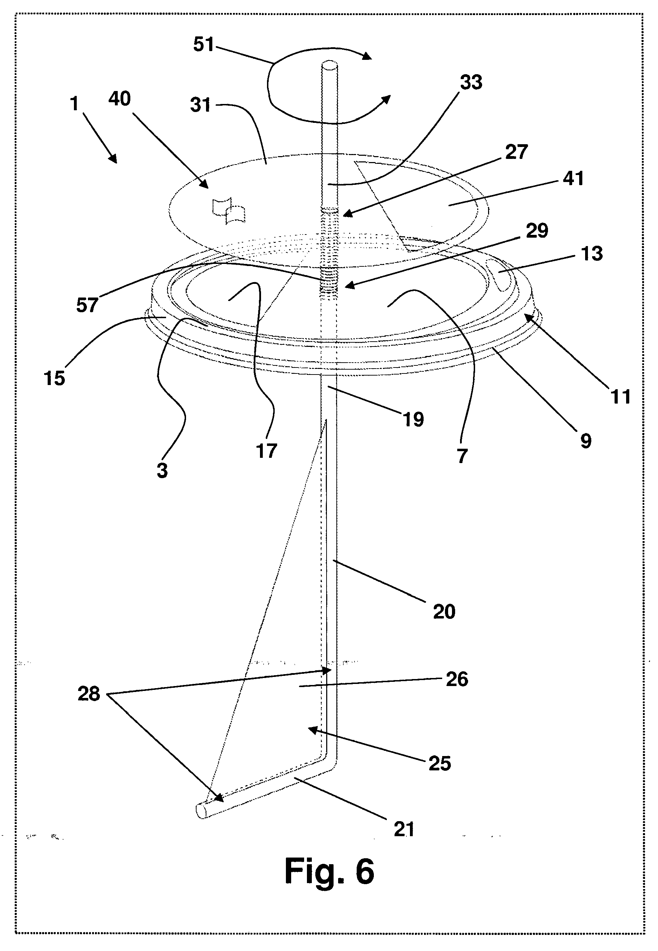

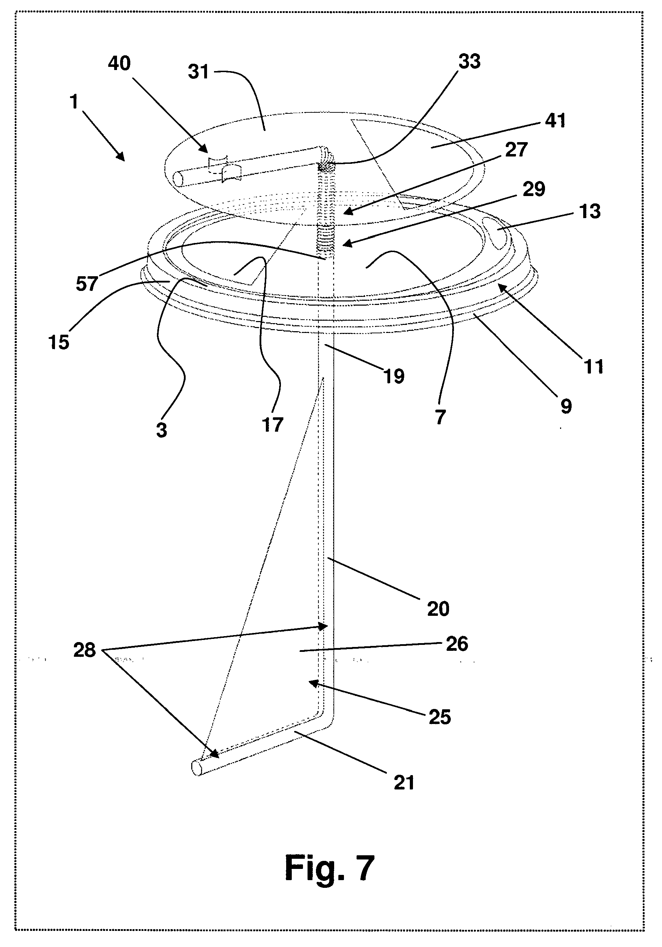

Die Figuren 6 und 7 zeigen eine erfindungsgemäße besonders einfach gestaltete und kostengünstig herstellbare Ausführungsform des erfindungsgemäßen Deckels 1. Der Deckel 1 umfasst wie erwähnt die Funktion, mittels des Rührers 25 den Becherinhalt eines in den Figuren 6 und 7 nicht dargestellten Getränkebechers umrührbar zu machen. Der Deckel 1 ist in der zweiten Ausführungsform gemäß den Figuren 6 und 7 für die Einmalverwendung als Getränkebecher konzipiert. Der Becherinhalt kann beispielsweise eine, insbesondere warme oder heiße, Lebensmittelflüssigkeit, wie Kaffee oder Tee, sein. Der Becherinhalt kann beispielsweise auch eine biologisch verträgliche Grundlösungssubstanz für darin lösbare medizinisch bzw. pharmazeutisch wirksame Substanzen sein.

Der Rührer 25 weist ein Rührelement 26 auf. Das Rührelement 26 ist zumindest teilweise flächig ausgebildet. Der Deckel 1 umfasst wie bei der anderen Ausführungsform einen Deckelhauptteil 15, eine Drehscheibe 31 und einen Rotor 19. Der Rotor 19 ist, vorzugsweise als röhrchenförmiges, zumindest im Bereich der Lagerstelle 29 in unterschiedliche Biegungszustände verbringbares schaftartiges Rotationsteil ausgebildet. Günstigerweise kann beispielsweise die Gestaltung eines herkömmlichen abbiegbaren Strohhalms als Ausbildung für den oberhalb des Rührelementes 26 liegenden Teiles des Rotors 19, genutzt werden. Der im Bereich des Rührelementes 26 liegende Teil des den Rotor 19 in den Rührer 25 fortsetzenden Schaftelementes 20 ist jedoch im Unterschied zu einem herkömmlichen Strohhalm raumgreifend, vorzugsweise abgewinkelt, ausgebildet. Der Trinkhalm ist sowohl Rührelement 26 als auch Trinkelement, insbesondere in einer solchen Deckelstellung, in der die Einfüllöffnung 41 nicht durchgängig geöffnet ist.

Die abgewinkelte Leiste 21 könnte auch entfallen, wodurch sich ein eindimensionaler Aufspannrahmen 28 ergeben würde. Der Steifigkeit des Rührelementes 26 kommt zur Unterstützung der Erzielung einer vorgebbaren Rührwirkung bei einem eindimensionalen schaftartigen Aufspannrahmen, wie einem Strohhalm, besondere Bedeutung zu.

Die Abwinkelung des Aufspannrahmens könnte auch durch eine Krümmung, beispielsweise eine ovale oder wellenförmige Krümmung, des Schaftelementes 20 ersetzt sein. Bei wellenförmiger Krümmung könnte auch mehr als ein zumindest teilweise flächiges Rührelement 26 vorhanden sein, wobei ein dann wellenförmiges Rührelement 26 einen Krümmungsbauch bzw. einen Wellenberg bzw. ein Wellental des Schaftelementes 20 flächig ausfüllt. Das Schaftelement 20 kann Teil eines Trinkhalms sein.

Die Abwinkelung bzw. Krümmung des Schaftelementes 20 als Fortsetzung des Rotors 19 in den Rührer 25 dient der Gewinnung eines das Rührelement 26 zumindest teilweise umfassenden Aufspannrahmens für das Rührelement 26. Das Rührelement 26 ist hier vollflächig einschichtig für den Getränkebecherinhalt undurchlässig ausgebildet. Das Rührelement 26 könnte jedoch zusätzlich zu seinen Flächenrändern, insbesondere Flächenaußenrändern, weitere verwirbelungsinduzierende, insbesondere verwirbelungsverstärkende, Gestaltungselemente wie runde, ovale, streifenförmige etc. Strömungsdurchlassöffnungen aufweisen.

Die Drehscheibe 31 und der Rührer 25 sind im verbauten Zustand auch bei der zweiten Ausführungsform zusammenhängend ausgeformt. Das Deckelhauptteil 15 befindet sich in paralleler Ausrichtung, zwischen der Drehscheibe 31 und dem Rührer 25. Die Drehscheibe 31 ist zur übersichtlicheren Darstellung in den Figuren 6 und 7 vom Deckelhauptteil nach oben abgesetzt gezeichnet. Das Deckelhauptteil 15 bietet ein Lager 29 für einen durchsteckbaren Anschluss 33a, 57 des Rotors 19, wobei das Lager 29 als Rotationspunkt für den ihn umrundenden Rührer 25 dient, an dem ein Ende 33 des Rotors 19 angreift. Der Rührer 25 bildet ein einsteckbares, längliches, vom Deckelhauptteil 15 axial wegweisendes Rundsteckteil 27, das einen Teil des Rotors 19 bildet. Die Drehscheibe 31 überspannt auch bei der zweiten Ausführungsform die Deckelinnensenke 7, die durch einen Umlaufwulst 3 begrenzt ist, aus dem sich ein Mundstück 11 mit einer Trinköffnung 13 hervorwölbt.

Die Drehscheibe 31 ist mit einem Fixiermittel 40 zur Fixierung für den in der Permanentverbringung an seinem oberen Ende 33 abgebogenen Rotor 19 ausgestattet. Das Fixiermittel 40 und das obere Ende 33 des Rotors 19 erfüllen durch ihr axiales Vorstehen die Funktion des Fingerringes 39 der oben beschriebenen Ausführungsform der Figuren 1 bis 4. Das Fixiermittel 40 und das obere Ende 33 des Rotors 19 gestatten im Verschwenkzustand der Permanentverbringung des Rotors 19 die unkomplizierte rotatorische Inbewegungsetzung des Rührers 25 durch den Konsumenten. Das Fixiermittel 40 ist an der Oberseite der Drehscheibe 31 angeordnet. Das Fixiermittel 40 ist hier als zwei nach oben abstehende Fixierlaschen ausgebildet. Das Fixiermittel 40 könnte auch als Fixierring, als Fixierbügel etc. ausgebildet sein. Das Fixiermittel 40 ist wie in den Figuren 6 und 7 ersichtlich, im Außenbereich 61 der Drehscheibe 31 angeordnet.

Das Deckelhauptteil 15 und die Drehscheibe 31 weisen auch bei der zweiten Ausführungsform jeweils eine Einfüllöffnung 17, 41 auf, die durch Verdrehen der Drehscheibe 31 in Übereinstimmung bringbar sind, sodass vorzugsweise durch ein Verdrehen der Drehscheibe 31 um 180° zwischen einer Einfüllstellung I und einer Trinkstellung 11 zu wechseln ist.

Der Rotor 19 umfasst eine Leiste 21. Die Leiste 21 kann eine geringere Höhe aufweisen, als die sich an den Umlaufwulst 3 anschließende Höhe des Klemmrands 9 des Deckels 1. Jedoch ist diese Ausbildung zur Ineinanderstapelung bzw. -schachtelung einer Vielzahl von Deckeln 1 bei der zweiten Ausführungsform nicht unbedingt erforderlich, weil der Rotor 19 mit dem Rührer 25 und dessen Rührelement 26 als separat lagerbares, durch den Deckel 1, d. h. den Deckelhauptteil 15 und die Drehscheibe 31 im Lager 29 durchsteckbares Teil, vorzugsweise wie oben ausgeführt als modifizierter abbiegbarer Strohhalm bzw. Trinkhalm, ausgebildet ist.

Der Deckelhauptteil 15 und die Drehscheibe 31 sind zwei parallel ausgerichtete, flache Kunststoffteile. Der Deckelhauptteil 15 und die Drehscheibe 31 werden durch den Rotor 19 in einer einen Freiheitsgrad 51 umfassenden Permanentverbringung gehalten (Figur 6). Die Permanentverbindung gewährt ausschließlich eine rotatorische Bewegungsrichtung.

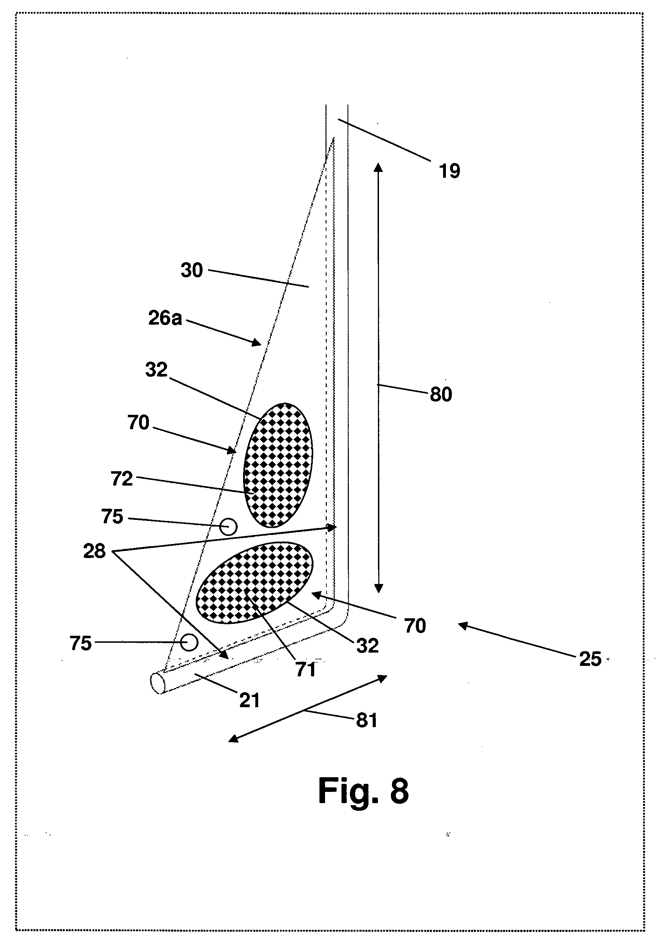

Figur 8 zeigt eine bevorzugte Weiterbildung des Rührelementes im unteren Teil des Rotors 19. Der Rührer 25 weist hier ein teilweise flächiges, segelförmiges Rührelement 26a auf. Das Rührelement 26a ist an einem das Rührelement 26a zumindest teilweise umfassenden Aufspannrahmen 28 aufgespannt. Der Aufspannrahmen 28 ermöglicht das Aufspannen des Rührelementes 26a in zwei unterschiedlichen Erstreckungsrichtungen 80, 81. Die Steifigkeit des Rührelementes 26a unterstützt die Erzielung einer vorgebbaren Rührwirkung.

Das Rührelement 26a weist mehrere Schichten 30, 32 auf und ist somit mehrschichtig ausgebildet. Die Schichten 30, 32 sind zumindest teilweise flächig, insbesondere an ihren Rändern, miteinander verbunden, beispielsweise verklebt. Der Kleber ist vorzugsweise ein lebensmitteltauglicher Kleber.

Der Aufspannrahmen 28 ist bei dieser Ausführungsform durch ein Schaftelement 20, wie ein Röhrchen, beispielsweise ein Strohhalmabschnitt, geschaffen, das insbesondere den unteren Teil des Rotors 19 des Rührers 25 bildet. Der Aufspannrahmen 28 ist ein einfach abgewinkelter, ebener, unterer, Teil des Rotors 19. Der Aufspannrahmen 28 könnte auch mehrere Abwinkelungen, beispielsweise in der Art einer Zick-Zack-Ausbildung, aufweisen.

Das Rührelement 26a ist als teilweise, vom Becherinhalt durchdringbares, lebensmitteltaugliches Behältnis 70 für zumindest einen darin mengenmäßig vorkonfektionierten Zusatzstoff ausgebildet.

Das Rührelement 26a ist mehrschichtig mittels einer Schicht 30 als Grund- oder Trägerschicht und zwei weiteren Schichten 32 ausgebildet. Mittels der, hier zwischen den, an ihren Rändern für den Zusatzstoff dicht verbundenen, Schichten 30, 32 des Rührelementes 26a ist das Behältnis 70 mit zumindest einem Kompartment 71 für die, insbesondere vorübergehende, Lagerung mindestens eines, vorzugsweise mengenmäßig vorkonfektionierten, Zusatzstoffes ausgebildet.

Im Ausführungsbeispiel der Figur 8 weist das Rührelement 26a zwei, voneinander separierte, Kompartments 71, 72 für jeweils zumindest einen Zusatzstoff auf. Das Kompartment 71, 72 ermöglicht die Freisetzung des in ihm gelagerten Zusatzstoffes in den Becherinhalt. Die Freisetzung kann in vorbestimmbaren zeitlichen Mengenraten erfolgen. Die Freisetzung kann zeitlich und mengenmäßig kontrolliert erfolgen. Die Freisetzung kann beispielsweise zeitlich gestaffelt erfolgen. Die Freisetzung kann mit unterschiedlicher Freisetzungsgeschwindigkeit erfolgen. Die Freisetzung kann mittels einer Ratenreguliervorrichtung kontrolliert werden. Die Ratenreguliervorrichtung kann beispielsweise durch unterschiedliche Membrandicken oder durch unterschiedliche Maschengrößen der Schichten 30, 32 realisiert sein.

Das Rührelement 26a weist zumindest ein verwirbelungsinduzierendes, insbesondere verwirbelungsverstärkendes, Gestaltungselement 75 auf. Das Gestaltungselement 75 ist hier eine Durchströmungsöffnung. Das Gestaltungselement 75 kann bei Aktivierung der Ratenreguliervorrichtung in den funktionsgerechten, d. h. verwirbelungsunterstützenden bzw. verwirbelungsverstärkenden, Zustand versetzt werden. Auch das Behältnis 70 kann zumindest ein verwirbelungsinduzierendes, insbesondere verwirbelungsverstärkendes, Gestaltungselement 75 aufweisen. Insbesondere kann das verwirbelungsverstärkende Gestaltungselement 75 des Behältnisses 70 bei Aktivierung der Ratenreguliervorrichtung in den funktionsgerechten, d. h. verwirbelungsunterstützenden bzw. verwirbelungsverstärkenden, Zustand versetzt werden.

Die einzelnen Bestandteile des Wegwerfproduktes können aus biologisch abbaubaren Materialien gefertigt sein. Z. B. können die einzelnen Teile aus essbaren oder leicht vergänglichen Materialien hergestellt sein. Alternativ lassen sich biologisch abbaubaren Kunststoffe verwenden. Die Langzeithaltbarkeit des verwendeten Materials ist nachrangig. Der Deckel ist zur Einmalverwendung bestimmt. Der Deckel zeichnet sich durch die materialsparrende und einfache Gestaltung aus. Der formstabile Deckel kann aus unterschiedlich dicken Materialien zusammengesetzt sein. Der Deckel kann insgesamt eine Verbundverbindung sein, d. h., ein Teil des Deckels ist aus einem ersten Kunststoff, während zum Beispiel die Drehscheibe aus einem anderen, dünneren oder leichterem Kunststoff gefertigt ist.

**Bezugszeichenliste:**

| | | | |
|---|---|---|---|
| 1 | Deckel | 40 | Fixiermittel |
| 3 | Umlaufwulst | 41 | Einfüllöffnung, insbesondere in der Drehscheibe |
| 5 | Deckelquerfläche | 43 | Unterlegscheibe (fakultativ) |
| 7 | Deckelinnensenke | 51 | Rotationsrichtung |
| 9 | Klemmrand | 53 | Höhe des Klemmrands |
| 11 | Mundstück | 55 | Höhe der Leiste |
| 13 | Trinköffnung | 57 | Achse |
| 15 | Deckelhauptteil | 59 | Einsteckrichtung |
| 17 | Einfüllöffnung, insbesondere im Deckelhauptteil | 61 | Außenbereich der Drehscheibe |
| 19 | Rotor | 70 | Behältnis |
| 20 | Schaftelement | 71 | Kompartment |
| 21 | Leiste | 72 | Kompartment |
| 23 | Steckvorrichtung | 75 | verwirbelungsinduzierendes Gestaltungselement |
| 25 | Rührer | 80 | Erstreckungsrichtung |
| 26 | zumindest teilweise flächiges Rührelement | 81 | Erstreckungsrichtung |
| 26a | segelförmiges Rührelement | 99 | Warmgetränkegefäß, insbesondere Einmalbecher mit Deckel 1 |
| 27 | Steckkrempe | I | infüllstellung |
| 28 | Aufspannrahmen | | |
| 29 | Lager | II | Trinkstellung |
| 30 | Schicht | | |
| 31 | Drehscheibe | | |
| 32 | Schicht | | |
| 33 | Ende | | |
| 33a | Rotorniete | | |
| 35 | Rotornietenloch | | |
| 37 | Nietenwiderhaken | | |
| 39 | Fingerring | | |

## Patentansprüche

1. Deckel (1) mit wenigstens einem Rührer (25),
der einen Deckelhauptteil (15), eine Drehscheibe (31) und einen den Rührer (25) umfassenden Rotor (19) aufweist,
wobei der Rührer (25) ein zumindest teilweise flächiges Rührelement (26, 26a) aufweist,
wobei die Drehscheibe (31) und der Rührer (25) im verbauten Zustand zusammenhängend ausgeformt sind, zwischen denen sich das Deckelhauptteil (15), vorzugsweise in paralleler Ausrichtung, befindet,
**dadurch gekennzeichnet, dass**
es ein Deckel (1) eines Getränkebechers (99), insbesondere für die Einmalverwendung als Getränkebecher, ist,
und wobei das Rührelement (26, 26a) mit dem als gebogener Strohhalm ausgebildeten Rotor (19) verbunden ist.

2. Deckel (1) nach Anspruch 1, weiterhin **dadurch gekennzeichnet, dass** das Deckelhauptteil (15) ein Lager (29) für einen durchsteckbaren Anschluss (33a, 57) des Rotors (19) bietet,
wobei insbesondere das Lager (29) als Rotationspunkt für den ihn umrundenden Rührer (25) dient, an dem ein Ende (33) des Rotors (19) angreift.

3. Deckel (1) nach einem der vorhergehenden Ansprüche, weiterhin **dadurch gekennzeichnet, dass**
wenigstens ein Rührer (25) ein einsteckbares, längliches, vom Deckelhauptteil (15) axial wegweisendes Rundsteckteil (27) ist, das einen Teil des Rotors (19) bildet.

4. Deckel (1) nach einem der vorhergehenden Ansprüche, weiterhin **dadurch gekennzeichnet, dass** die Drehscheibe (31) eine Deckelinnensenke (7) überspannt, die durch einen Umlaufwulst (3) begrenzt ist, aus dem sich ein Mundstück (11) mit einer Trinköffnung (13) hervorwölbt.

5. Deckel (1) nach einem der vorhergehenden Ansprüche, weiterhin **dadurch gekennzeichnet, dass** die Drehscheibe (31) mit einem Fingerring (39) ausgestattet ist, der insbesondere durch die Drehscheibe (31) durchreicht, wobei vorzugsweise der Fingerring (39) im Außenbereich (61) der Drehscheibe (31) angeordnet ist.

6. Deckel (1) nach einem der vorhergehenden Ansprüche, weiterhin **dadurch gekennzeichnet, dass** Deckelhauptteil (15) und Drehscheibe (31) jeweils eine Einfüllöffnung (17, 41) aufweisen, die durch Verdrehen (51) der Drehscheibe (31) in Übereinstimmung bringbar sind, sodass vorzugsweise durch ein Verdrehen (51) der Drehscheibe (31) um 180° zwischen einer Einfüllstellung (I) und einer Trinkstellung (II) zu wechseln ist.

7. Deckel (1) nach einem der vorhergehenden Ansprüche, weiterhin **dadurch gekennzeichnet, dass**
Deckelhauptteil (15) und Drehscheibe (31) zwei parallel zueinander ausgerichtete, flache Kunststoffteile sind, die durch wenigstens eine Rotorniete (33a) umfassenden Rotor (19) in einer einen Freiheitsgrad (51) umfassenden Permanentverbringung gehalten werden.

8. Deckel (1) nach einem der vorhergehenden Ansprüche, weiterhin **dadurch gekennzeichnet, dass** das zumindest teilweise flächige Rührelement (26), das insbesondere ein segelförmiges Rührelement (26a) sein kann, an einem das Rührelement (26) zumindest teilweise umfassenden Aufspannrahmen (28), der durch den Strohhalm gebildet wird, aufgespannt ist, der das Aufspannen des Rührelementes (26) in zumindest einer Erstreckungsrichtung (80), vorzugsweise in zumindest zwei unterschiedlichen Erstreckungsrichtungen (80, 81), ermöglicht, wobei insbesondere die Steifigkeit des Rührelementes (26) die Erzielung einer vorgebbaren Rührwirkung unterstützt.

9. Deckel (1) nach einem der vorhergehenden Ansprüche, weiterhin **dadurch gekennzeichnet, dass** das Rührelement (26) zumindest eine Schicht (30, 32) aufweist und somit einschichtig oder mehrschichtig ausgebildet ist, wobei insbesondere bei einem mehrschichtigen Rührelement (26) die Schichten (30, 32) zumindest teilweise flächig, insbesondere an ihren Rändern, miteinander verbunden, beispielsweise verklebt, sind.

10. Deckel (1) nach einem der Ansprüche 8 bis 9, weiterhin **dadurch gekennzeichnet, dass** das Rührelement (26) als zumindest teilweise, vom Becherinhalt durchdringbares, insbesondere im Becherinhalt auflösbares, lebensmitteltaugliches Behältnis (70) für zumindest einen darin mengenmäßig vorkonfektionierten Zusatzstoff ausgebildet ist.

11. Deckel (1) nach einem der Ansprüche 8 bis 10, weiterhin **dadurch gekennzeichnet, dass** das Rührelement (26) zumindest zweischichtig mittels zweier Schichten (30, 32) ausgebildet ist, wobei mittels der, insbesondere zwischen den, insbesondere an ihren Rändern für den Zusatzstoff dicht verbundenen, Schichten (30, 32) des Rührelementes (26) das Behältnis (70) mit zumindest einem Kompartment (71) für die, insbesondere vorübergehende, Lagerung mindestens eines, vorzugsweise mengenmäßig vorkonfektionierten, Zusatzstoffes ausgebildet ist.

12. Deckel (1) nach einem der Ansprüche 8 bis 11, weiterhin **dadurch gekennzeichnet, dass** das Rührelement (26) zumindest zwei, insbesondere voneinander separierte, Kompartments (71, 72) für jeweils zumindest einen Zusatzstoff aufweist, die, insbesondere zeitlich gestaffelt, insbesondere mit unterschiedlicher Freisetzungsgeschwindigkeit, mittels einer Ratenreguliervorrichtung, wie unterschiedlicher Membrandicken oder unterschiedlicher Maschengrößen der Schichten (30, 32), die Freisetzung der Zusatzstoffe in den Becherinhalt in vorbestimmbaren zeitlichen Mengenraten ermöglichen.

13. Deckel (1) nach einem der Ansprüche 8 bis 12, weiterhin **dadurch gekennzeichnet, dass** das Rührelement (26) zumindest ein verwirbelungsinduzierendes, insbesondere verwirbelungsverstärkendes, Gestaltungselement (75), wie ein Strömungsdurchlass- bzw. Verwirbelungsmittel, wie eine Durchströmungsöffnung, aufweist, das insbesondere bei Aktivierung der Ratenreguliervorrichtung in den funktionsgerechten Zustand versetzt wird.

14. Deckel (1) nach einem der Ansprüche 8 bis 13, weiterhin **dadurch gekennzeichnet, dass** die Drehscheibe (31) ein, insbesondere an ihrer Oberseite angeordnetes, Fixiermittel (40) zur Fixierung des in der Permanentverbringung befindlichen Rotors (19) aufweist, wobei insbesondere das Fixiermittel (40) im Zusammenwirken mit dem oberen Ende (33) des Rotors (19) durch ein axiales Vorstehen die Funktion des Fingerringes (39) erfüllt.

15. Deckel (1) nach Anspruch 14, weiterhin **dadurch gekennzeichnet, dass** das Fixiermittel (40) als zwei nach oben abstehende, insbesondere gekrümmte, Fixierlaschen ausgebildet ist.

16. Verfahren zum Abdecken eines Getränkebechers (99) mit einem Deckel (1) nach einem der vorhergehenden Ansprüche, **dadurch gekennzeichnet, dass** in einem ersten Teil, den Deckelhauptteil (15), die Drehscheibe (31) und die Leiste (21) umfassenden Teil, ein als zweites Teil gestalteter Rührer (25) formschlüssig einsteckbar ist, bevor der Deckel (1) über seinen Klemmrand (9) auf eine zur Becherhöhe querverlaufenden Öffnung des Bechers (99) gesteckt wird.

17. Verfahren nach Anspruch 16, weiterhin **dadurch gekennzeichnet, dass** das erste Teil aus einem Spender, der die ersten Teile (15, 31, 21) gestapelt zur Verfügung stellt, durch Abziehen eines ersten Teils von einem weiteren ersten Teil entnehmbar ist, um anschließend den Rührer (25) auf der Unterseite des Deckels (1), der Drehscheibenseite abgewandten Seite aufzunehmen.

## Claims

1. A lid (1) comprising at least one stirrer (25),
which encompasses a main lid part (15), a rotary disk (31) and a rotor (19) comprising the stirrer (25),
wherein the stirrer (25) encompasses an at least partially two-dimensional stirring element (26, 26a),
wherein, in the assembled state, the rotary disk (31) and the stirrer (25) are set in an interconnected configuration, between which is the main lid part (15), preferably in parallel alignment,
**characterized in that**
it is a lid (1) of a beverage cup (99), in particular for the single-use as a beverage cup,
and wherein the stirring element (26, 26a) is connected to the rotor (19), which is formed as a bended straw.

2. The lid (1) according to claim 1, further **characterized in that** the lid main part (15) provides for a bearing (29) for an insertable connection (33a, 57) of the rotor (19), wherein in particular the bearing (29) serves as rotation point for the stirrer (25), which circles around said rotation point, whereby engages with one end (33) of the rotor (19).

3. The lid (1) according to one of the preceding claims, further **characterized in that** at least one stirrer (25) is an insertable, elongate round connector (27), which points axially away from the main lid part (15) and which forms a part of the rotor (19).

4. The lid (1) according to one of the preceding claims, further **characterized in that** the rotary disk (31) spans an inner lid depression (7), which is defined by a circumferential flaring (3), from which a mouthpiece (11) comprising a drinking sprout (13) bulges outwardly.

5. The lid (1) according to one of the preceding claims, further **characterized in that** the rotary disk (31) is equipped with a finger ring (39), which passes in particular through the rotary disk (31), wherein the finger ring (39) is preferably arranged in the outer area (61) of the rotary disk (31).

6. The lid (1) according to one of the preceding claims, further **characterized in that** main lid part (15) and rotary disk (31) in each case encompass a filling sprout (17, 41), which can be aligned by turning (51) the rotary disk (31), so that preferably a switch-over can be made between a filling position (I) and a drinking position (II) by turning (51) the rotary disk (31) by 180°.

7. The lid (1) according to one of the preceding claims, further **characterized in that** main lid part (15) and rotary disk (31) are two flat plastic parts, which are in parallel alignment to each other and which are held in a permanent connection comprising a degree of freedom (51) by means of the rotor (19) comprising at least one rotor rivet (33a).

8. The lid (1) according to one of the preceding claims, further **characterized in that** the at least partially two-dimensional stirring element (26), which can in particular be a sail-shaped stirring element (26a), is mounted to a mounting frame (28), which at least partially envelopes the stirring element and which is formed by the straw and which enables the mounting of the stirring element (26) in at least one direction of extension (80), preferably in at least two different directions of extension (80, 81), wherein in particular the stiffness of the stirring element (26) supports the achievement of a stirring effect, which can be predetermined.

9. The lid (1) according to one of the preceding claims, further **characterized in that** the stirring element (26) encompasses at least one layer (30, 32) and is thus designed in single layer or in a plurality of layers, wherein in particular the layers (30, 32) of a plurality-layered stirring element (26) are connectedto one another, for example glued, at least partially in a two-dimensional manner, in particular at their edges.

10. The lid (1) according to one of claims 8 to 9, further **characterized in that** the stirring element (26) is designed as a container (70) which is suitable for food, being at least partially penetrable by the content of the cup, in particular being capable of being dissolved in the content of the cup, for at least one additive, which is quantitatively preassembled therein.

11. The lid (1) according to one of the claims 8 to 10, further **characterized in that** the stirring element (26) is designed at least in two layers by means of two layers (30, 32), wherein the container (70) is designed with at least one compartment (71) for the in particular intermediate storage of at least one, preferably quantitatively preassembled additive, by means of, in particular between, the layers (30, 32) of the stirring element (26), which are tightly connected, in particular at their edges for the additive.

12. The lid (1) according to one of the claims 8 to 11, further **characterized in that** the stirring element (26) encompasses at least two compartments (71, 72), which are in particular separated from each other, respectively for at least one additive each, which enable the release of the additives into the content of the cup, in time output rates, which can be predetermined, in particular time-graduated, in particular at a different release speed, by means of a rate regulating device, like different membrane thicknesses or different mesh sizes of the layers (30, 32).

13. The lid (1) according to one of the claims 8 to 12, further **characterized in that** the stirring element (26) encompasses at least one swirl-inducing, in particular swirl-amplifying, design element (75), like a flow passage means or swirling means, like a flow opening, which in particular is shifted into a state of functionality in response to the activation of the rate regulating device.

14. The lid (1) according to one of the claims 8 to 13, further **characterized in that** the rotary disk (31) encompasses a fixing means (40), which is arranged in particular at its upper side, for fixing the rotor (19), which is in the permanent connection, wherein in particular the fixing means (40), due to its axial projection, fulfills the function of the finger ring (39) in cooperation with the upper end (33) of the rotor (19).

15. The lid (1) according to claim 14, further **characterized in that** the fixing means (40) is designed as two fixing lugs, which project upwardly, which are in particular curved.

16. A method for covering a beverage cup (99) with a lid (1) according to one of the preceding claims, **characterized in that**
a first part is comprising the main lid part (15), the rotary disk (31) and the slat (21), and into said first part a stirrer (25), which is designed as second part, can be inserted in a positive fit before the lid (1) is pushed beyond its clamping edge (9) onto an opening of the cup (99), which is transverse to the cup height.

17. The method according to claim 16, further **characterized in that**
the first part can be taken out of a dispenser, which provides the first parts (15, 31, 21) in a stacked manner, by taking off a first part from a further first part, so as to next accommodate the stirrer (25) on the lower side of the lid (1), the side facing away from the rotary disk side.

## Revendications

1. Couvercle (1) avec au moins un agitateur (25)
qui présente une partie principale de couvercle (15), un disque rotatif (31) et un rotor (19) qui renferme l'agitateur (25), l'agitateur (25) présentant un élément agitateur (26, 26a) au moins partiellement plat,
le disque rotatif (31) et l'agitateur (25) étant formés de façon connexe à l'état monté, entre lesquels se trouve la partie principale de couvercle (15), de préférence dans une orientation parallèle,
**caractérisé en ce que**
c'est un couvercle (1) d'un gobelet pour boisson (99), en particulier pour l'usage unique en tant que gobelet pour boisson,
l'élément agitateur (26, 26a) étant relié au rotor (19) configuré comme une paille courbée.

2. Couvercle (1) selon la revendication 1, **caractérisé de plus en ce que** la partie principale de couvercle (15) offre un palier (29) pour un raccord (33a, 57) du rotor (19), raccord pouvant être passé à travers,
cependant qu'en particulier le palier (29) sert de point de rotation pour l'agitateur (25) qui l'entoure sur lequel agit une extrémité (33) du rotor (19).

3. Couvercle (1) selon l'une des revendications précédentes, **caractérisé de plus en ce qu'**au moins un agitateur (25) est une pièce enfichable ronde (27) pouvant être enfichée, qui est allongée, éloignée axialement de la partie principale de couvercle (15) et qui forme une partie du rotor (19).

4. Couvercle (1) selon l'une des revendications précédentes, **caractérisé de plus en ce que** le disque rotatif (31) est tendu sur un abaissement intérieur du couvercle (7) qui est limité par un bourrelet périphérique (3) hors duquel un embout pour la bouche (11) avec une ouverture pour boire (13) sort courbé.

5. Couvercle (1) selon l'une des revendications précédentes, **caractérisé de plus en ce que** le disque rotatif (31) est équipé d'un anneau pour le doigt (39) qui traverse en particulier le disque rotatif (31), l'anneau pour le doigt (39) étant de préférence placé dans la zone extérieure (61) du disque rotatif (31).

6. Couvercle (1) selon l'une des revendications précédentes, **caractérisé de plus en ce que** la partie principale de couvercle (15) et le disque rotatif (31) présentent respectivement une ouverture de remplissage (17, 41) qui peuvent être amener à coïncider en tournant (51) le disque rotatif (31) si bien que l'on peut changer de préférence entre une position de remplissage (I) et une position d'action de boire (II) en tournant (51) le disque rotatif (31) de 180°.

7. Couvercle (1) selon l'une des revendications précédentes, **caractérisé de plus en ce que** la partie principale de couvercle (15) et le disque rotatif (31) sont deux pièces en matière plastique plates orientées parallèlement l'une à l'autre qui sont maintenues par au moins un rotor (19) comprenant au moins un rivet de rotor (33a) dans un logement permanent qui comprend un degré de liberté (51).

8. Couvercle (1) selon l'une des revendications précédentes, **caractérisé de plus en ce que** l'élément agitateur (26) qui est au moins partiellement plat qui peut être, en particulier, un élément agitateur en forme de voile (26a) est tenu sur un cadre de montage (28) qui comprend au moins partiellement l'élément agitateur (26), cadre qui est formé par la paille, qui permet le montage de l'élément agitateur (26) dans au moins un sens d'extension (80), de préférence au moins dans deux sens d'extension différents (80, 81), cependant qu'en particulier la rigidité de l'élément agitateur (26) soutient l'obtention d'un effet d'agitation qui peut être prédéfini.

9. Couvercle (1) selon l'une des revendications précédentes, **caractérisé de plus en ce que** l'élément agitateur (26) présente au moins une couche (30, 32) et est donc configuré en une couche ou en plusieurs couches, cependant qu'en particulier pour un élément agitateur en plusieurs couches (26) les couches (30, 32) sont reliées l'une à l'autre au moins partiellement en surface, en particulier sur leurs bords, par exemple en étant collées.

10. Couvercle (1) selon l'une des revendications 8 à 9, **caractérisé de plus en ce que** l'élément agitateur (26) est configuré comme un récipient (70) pouvant être traversé au moins partiellement par le contenu du gobelet, en particulier comme un récipient de qualité alimentaire (70) pouvant être dissous dans le contenu du gobelet, pour au moins un additif dont la quantité y a été préconfectionnée.

11. Couvercle (1) selon l'une des revendications 8 à 10, **caractérisé de plus en ce que** l'élément agitateur (26) est configuré au moins en deux couches au moyen de deux couches (30, 32), cependant que le récipient (70) est configuré, au moyen des couches (30, 32) de l'élément agitateur (26) qui sont reliées en particulier entre, en particulier sur leurs bords étanches pour l'additif, avec au moins un compartiment (71) pour le stockage, en particulier temporaire, d'au moins un additif, de préférence dont la quantité y a été préconfectionnée.

12. Couvercle (1) selon l'une des revendications 8 à 11, **caractérisé de plus en ce que** l'élément agitateur (26) présente au moins deux compartiments (71, 72), en particulier séparés l'un de l'autre pour respectivement au moins un additif, qui permettent la libération des additifs dans le contenu du gobelet en proportions de quantités dans le temps qui peuvent être prédéterminées, en particulier en étant étalées dans le temps, en particulier avec une vitesse de libération différente, au moyen d'un dispositif de régulation des proportions comme des épaisseurs de membrane différentes ou des tailles de maille différentes des couches (30,32).

13. Couvercle (1) selon l'une des revendications 8 à 12, **caractérisé de plus en ce que** l'élément agitateur (26) présente au moins un élément de configuration (75) induisant un tourbillonnement, en particulier renforçant un tourbillonnement, comme un moyen de passage d'écoulement ou de tourbillonnement comme une ouverture d'écoulement qui en particulier est mise dans l'état de fonctionnement lors de l'activation du dispositif de régulation des proportions.

14. Couvercle (1) selon l'une des revendications 8 à 13, **caractérisé de plus en ce que** le disque rotatif (31) présente un moyen de fixation (40), en particulier placé sur son côté supérieur, pour la fixation du rotor (19) qui se trouve dans le logement permanent, cependant qu'en particulier le moyen de fixation (40), en coopération avec l'extrémité supérieure (33) du rotor (19), remplit la fonction de l'anneau pour le doigt (39) en faisant saillie axialement.

15. Couvercle (1) selon la revendication 14, **caractérisé de plus en ce que** le moyen de fixation (40) est configuré comme deux poches de fixation faisant saillie vers le haut, en particulier courbées.

16. Procédé pour recouvrir un gobelet pour boisson (99) avec un couvercle (1) selon l'une des revendications précédentes, **caractérisé en ce qu'**une première partie comprend la partie principale de couvercle (15), le disque rotatif (31) et la baguette (21) et
qu'un agitateur (25) configuré comme seconde partie peut être enfoncé de manière crabotée dans sa première partie avant que le couvercle (1) soit mis par son bord de serrage (9) sur une ouverture du gobelet (99) qui est transversale par rapport à la hauteur du gobelet.

17. Procédé selon la revendication 16, **caractérisé de plus en ce que** la première partie constituée par un distributeur qui met à disposition les premières parties (15, 31, 21) de manière empilée, peut être enlevée en retirant une première partie d'une autre première partie pour ensuite prendre l'agitateur (25) sur le côté inférieur du couvercle (1), éloigné du côté du disque rotatif.
